# EUROPÄISCHE PATENTSCHRIFT

(11) **EP 1 960 694 B1**
(45) Veröffentlichungstag und Bekanntmachung des Hinweises auf die Patenterteilung: **31.03.2010**
(21) Anmeldenummer: 06819708.6
(22) Anmeldetag: 23.11.2006
(51) Int. Cl.: F16H 23/04, F04B 1/12

(54) **TAUMELSCHEIBENGETRIEBE**
SWASH-PLATE MECHANISM
MECANISME A PLATEAU OSCILLANT

(30) Priorität: 06.12.2005 DE 102005058072
(43) Veröffentlichungstag der Anmeldung: 27.08.2008
(73) Patentinhaber: Schaeffler KG, 91074 Herzogenaurach (DE)
(72) Erfinder: NUISSL, Christian, 90439 Nürnberg (DE); STÖLZLE, Jürgen, 73441 Bopfingen (DE)
(86) Internationale Anmeldenummer: PCT/EP2006/068819
(87) Internationale Veröffentlichungsnummer: WO 2007/065800

(56) Entgegenhaltungen:
- DE-A1- 10 357 084
- DE-A1- 19 737 540
- DE-B4- 19 738 813

## Beschreibung

### Gebiet der Erfindung

Die Erfindung betrifft ein insbesondere für Axialkolbenpumpen geeignetes Taumelscheibengetriebe nach dem Oberbegriff des Anspruchs 1.

### Hintergrund der Erfindung

Ein Taumelscheibengetriebe ist beispielsweise aus der DE 197 37 540 A1 bekannt. Dieses Taumelscheibengetriebe weist eine Taumelscheibe auf, welche mit einem einen Taumelkörper überlappenden Bord versehen ist, um sicherzustellen, dass zwischen dem Bord und dem Taumelkörper angeordnete Wälzkörper sicher auf ihren Laufbahnen gehalten sind.

Ein ebenfalls für eine Axialkolbenmaschine, insbesondere eine Pumpe eines Hochdruckreinigungsgerätes, geeignetes Taumelscheibengetriebe ist aus der gattungsgemäßen DE 102 37 557 A1 bekannt. Die Taumelscheibe wird in diesem Fall nicht direkt, sondern über ein Ritzel, welches mit einer in die Taumelscheibe eingeformten Verzahnung kämmt, angetrieben.

Ein weiteres für Axialkolbenpumpen geeignetes Taumelscheibengetriebe ist aus der DE 103 57 084 A1 bekannt. Dieses Taumelscheibengetriebe weist einen als Blechumformteil gefertigten Taumelkörper auf, an dessen Oberfläche jeweils eine Laufbahn für einen Axial-Kugelkranz sowie für einen Taumel-Kugelkranz gebildet ist. Der Taumelkörper bildet somit einen gemeinsamen Lagerinnenring für jeden der Taumelkörper, während die zugehörigen Lageraußenringe durch eine separate Gehäusescheibe bzw. Taumelscheibe gegeben sind. Der Taumelwinkel, d.h. die Schrägstellung der Taumelscheibe gegenüber der Gehäusescheibe, ist durch die Form des aus Blech umgeformten Taumelkörpers gegeben. Für die Fertigung unterschiedlicher Typen von Taumelscheibengetrieben, die sich hinsichtlich des Taumelwinkels unterscheiden, wird daher eine entsprechende Anzahl verschiedener Taumelkörper benötigt.

### Aufgabe der Erfindung

Der Erfindung liegt die Aufgabe zugrunde, die Fertigung von insbesondere für Axialkolbenpumpen geeigneten Taumelscheibengetrieben zu vereinfachen.

### Zusammenfassung der Erfindung

Diese Aufgabe wird erfindungsgemäß gelöst durch ein Taumelscheibengetriebe mit den Merkmalen des Anspruchs 1.

Das Taumelscheibengetriebe weist einen zwischen einer Gehäusescheibe und einer Taumelscheibe mittels jeweils eines Wälzlagers drehbar gelagerten Taumelkörper auf: Dieser ist als Blechumformteil gefertigt, wobei das Blech, aus welchem der Taumelkörper geformt wird, wie jedes Stück Blech, zwei Seiten aufweist, die beispielsweise als Vorderseite und Rückseite bezeichnet werden können. Der Begriff "Oberfläche" schließt zusammenfassend die Oberfläche der Vorderseite und die Oberfläche der Rückseite des Bleches ein. An der Oberfläche des den Taumelkörper bildenden Bleches befinden sich Laufbahnen der Wälzlager des Taumelscheibengetriebes. Beide Laufbahnen sind auf derselben Seite des Bleches angeordnet. Ist beispielsweise die Vorderseite des Bleches, aus welchem der Taumelkörper spanlos geformt ist, beschichtet, während die Rückseite des Bleches unbeschichtet ist, so befinden sich beide Laufbahnen auf der beschichteten Seite.

Die Taumelscheibe weist zwei etwa scheibenförmige Teilstücke auf, die einstückig über einen Steg miteinander verbunden sind. Auf jedem dieser Teilstücke befindet sich eine Laufbahn eines Wälzlagers, wobei die Teilstücke um mehr als 180° relativ zueinander umgebogen sind. Diese Ausgestaltung hat den besonderen Vorteil, dass der Taumelwinkel des Taumelkörpers durch eine mehr oder weniger ausgeprägte Biegung des Steges einstellbar ist. Dagegen weisen die die Innenscheiben der Wälzlager bildenden Teilstücke von Taumelkörpern mit unterschiedlichem Taumelwinkel eine einheitliche Form auf. Der Werkzeugaufwand zur Herstellung eines Bausatzes von Taumelkörpern mit unterschiedlichem Taumelwinkel ist somit minimiert. Sämtliche Taumelkörper des Bausatzes sind aus Blechrohlingen herstellbar, die im unverformten Zustand eine übereinstimmende Form aufweisen. Vorzugsweise weisen verschiedene Taumelkörper eines Bausatzes von Taumelkörpern, die sich ausschließlich durch die Formung ihres Steges unterscheiden, Taumelwinkel auf, die um mindestens 5° differieren. Beispielsweise beträgt der Taumelwinkel des kleinsten Taumelkörpers weniger als 7°, während der Taumelwinkel des größten Taumelkörpers desselben Bausatzes mehr als 12° beträgt.

Die beiden Wälzlager des Taumelscheibengetriebes weisen bevorzugt übereinstimmende Abmessungen auf. Dies hat den Vorteil, dass für die Wälzlager gleichartige Außenringe verwendbar sind. Vorzugsweise sind die Wälzlager als vollkugelige Lager, d.h. Kugellager ohne Käfig, ausgebildet. Auf diese Weise sind die Wälzlager mit einer besonders hohen Anzahl an Kugeln bestückbar, womit eine besonders hohe Tragfähigkeit erreicht wird bzw. bei gegebenen Anforderungen an die Tragfähigkeit die Verwendung besonders kleiner Kugeln ermöglicht wird. Darüber hinaus sind die Wälzlager durch den Wegfall eines Kunststoffkäfigs thermisch besonders hoch belastbar. Die Wälzkörper eines Wälzlagers weisen bevorzugt einen Durchmesser auf, der weniger als 10% des Teilkreisdurchmessers des Wälzlagers entspricht.

Während die beiden Teilstücke des Taumelkörpers in einem ersten Bereich ihres Umfangs durch den Steg in Abhängigkeit vom eingestellten Taumelwinkel mehr oder weniger voneinander beabstandet sind, ist im dem Steg gegenüberliegenden Umfangsbereich der Teilstücke vorzugsweise eine formschlüssige Verbindung zwischen diesen gebildet. Somit weist der Taumelkörper bei jedem mit einheitlichen Blechrohlingen realisierbaren Taumelwinkel eine vergleichbar hohe mechanische Belastbarkeit auf. Im gesamten allein durch Biegung des Steges des im Übrigen fertig umgeformten Taumelkörpers einstellbaren Bereich des Taumelwinkels, beispielsweise von höchstens 5° bis mindestens 14°, ist der Taumelkörper in vorteilhafter Ausgestaltung zumindest annähernd ausgewuchtet.

Die Außenringe der Wälzlager des Taumelscheibengetriebes, d.h. die Gehäusescheibe sowie die Taumelscheibe, sind vorzugsweise unverlierbar am Taumelkörper gehalten, so dass gekapselte Lager, insbesondere Schrägkugellager, gebildet sind. Die drehbare und zugleich unverlierbare Halterung der Außenringe am Taumelkörper ist vorzugsweise durch Schnappverbindungen realisiert, wobei der Taumelkörper einstückig mit diesem ausgebildete Schnapphaken aufweist. Bei Ausbildung der Wälzlager als Schrägkugellager beträgt der Druckwinkel vorzugsweise mindestens 45° und höchstens 75°. Mit derartigen Axialschrägkugellagern ist auch eine ausreichende radiale Belastbarkeit gegeben, die sicherstellt, dass der Taumelkörper, die Taumelscheibe und die Gehäusescheibe in jedem Betriebszustand des Taumelscheibengetriebes zentriert bleiben.

Nach einer vorteilhaften Ausgestaltung weisen die Lageraußenringe, das heißt die Gehäusescheibe und die Taumelscheibe außenseitig einen konkaven, in axialer Draufsicht ringförmigen Oberflächenbereich auf. Diese Gestaltung erhöht zum einen die Stabilität des Lageraußenrings, wodurch dieser besonders dünnwandig gestaltet werden kann. Zum anderen ist der konkave Oberflächenbereich besonders dazu geeignet, eine Anlagefläche für ein Abtriebselement des Taumelscheibengetriebes, insbesondere für einen Kolben einer Axialkolbenpumpe, zu bilden. Der Krümmungsradius des konkaven Oberflächenbereichs beträgt vorzugsweise weniger als 25% des Teilkreisdurchmessers des Wälzlagers. Damit sind Lageraußenringe mit identischer Form für Taumelkörper mit unterschiedlichen Taumelwinkeln geeignet, wobei bei jedem beliebigen Taumelwinkel Abtriebselemente einheitlicher Form zum Einsatz kommen können. Eine Anpassung der mit dem Lageraußenring zusammenwirkenden Gleitfläche des Abtriebselementes auf den Taumelwinkel des Taumelscheibengetriebes ist dank des in einem ringförmigen Oberflächenbereich konkav gewölbten Lageraußenrings nicht erforderlich. Die konkave Gestaltung des Lagerauβenrings hat darüber hinaus den Vorteil, dass die Hertzschen Pressungen zwischen dem Lageraußenring und dem Abtriebselement im Vergleich zu einem herkömmlichen Lageraußenring mit ebener Oberfläche deutlich reduziert sind.

Nach einer bevorzugten Weiterbildung weist eines der Teilstücke des Taumelkörpers eine zentrale Öffnung mit einem zur formschlüssigen Zusammenwirkung mit einer Antriebswelle geeigneten Innenprofil auf. Das zweite Teilstück, welches ebenfalls im Wesentlichen scheibenförmig ist, weist bevorzugt auch eine zentrale Öffnung auf, die jedoch eine größere Fläche als die Öffnung des ersten Teilstücks hat. Auf diese Weise ist eine besonders gute Schmierbarkeit des Taumelscheibengetriebes gegeben.

Der Vorteil der Erfindung liegt insbesondere darin, dass aus lediglich zwei verschiedenen Bauteilen, nämlich zum einen sowohl als Taumelscheibe als auch als Gehäusescheibe verwendbaren Lageraußenringen und zum anderen Taumelkörpern mit einheitlich geformten, etwa scheibenförmigen, Lagerinnenringe bildenden Teilstücken, die über einen zur Einstellung des Taumelwinkels verformbaren Steg verbunden sind, mannigfaltige Taumelscheibengetriebe herstellbar sind, die insbesondere axial nur einen geringen Bauraum benötigen.

Nachfolgend wird ein Ausführungsbeispiel der Erfindung anhand einer Zeichnung näher erläutert. Hierin zeigen:

### Kurze Beschreibung der Zeichnung

- Figur 1: ausschnittsweise in einem Querschnitt eine Axialkolbenpumpe mit einem Taumelscheibengetriebe,
- Figur 2: eine perspektivische Ansicht des Taumelscheibengetriebes nach Figur 1,
- Figur 3 und 4: das Taumelscheibengetriebe nach Figur 2 in einer Draufsicht bzw. in einem Schnitt,
- Figur 5 bis 7: in Ansichten analog Figuren 2 bis 4 ein für die Axialkolbenpumpe nach Figur 1 geeignetes Taumelscheibengetriebe mit reduziertem Taumelwinkel,
- Figur 8 und 9: einen Blechrohling zur Fertigung wahlweise des Taurrielscheibengetriebes nach den Figuren 2 bis 4 oder des Taumelscheibengetriebes nach den Figuren 5 bis 7

### Ausführliche Beschreibung der Zeichnung

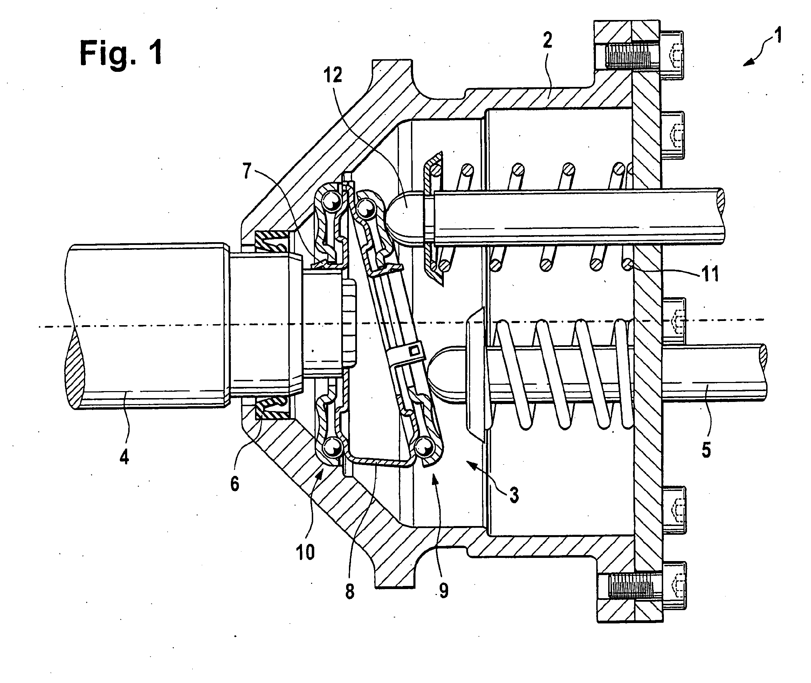

Die Figur 1 zeigt ausschnittsweise eine Axialkolbenpumpe 1, deren prinzipielle Funktion beispielsweise aus der DE 197 38 813 B4 bekannt ist. Die Axialkolbenpumpe 1 ist insbesondere für den Einsatz in einem Hochdruckreinigungsgerät geeignet. In einem Pumpengehäuse 2 der Axialkolbenpumpe 1 ist ein Taumelscheibengetriebe 3 angeordnet, welches die rotierende Bewegung einer motorisch angetriebenen Welle 4 in Hubbewegungen dreier Kolben 5 als Abtriebselemente umsetzt. Zur Abdichtung der Welle 4 gegenüber dem Pumpengehäuse 2 ist eine Dichtung 6 vorgesehen. Die Welle 4, welche mit einem Motorzapfen des elektromotorischen Antriebs der Axialkolbenpumpe 1 identisch ist, weist einen profilierten Wellenzapfen 7 auf, der in einen als Blechumformteil ausgebildeten Taumelkörper 8 des Taumelscheibengetriebes 3 teilweise eingreift. Der Taumelkörper 8 ist mittels eines ersten Wälzlagers 9 sowie eines zweiten Wälzlagers 10 drehbar innerhalb des Taumelscheibengetriebes 3 gelagert. Die Kolben 5 sind mittels als Schraubenfedern ausgebildeter Druckfedern 11 gegen das Taumelscheibengetriebe 3 angefedert, wobei halbkugelig geformte Fußstücke 12 der Kolben 5 eine axiale Kraft auf das erste Wälzlager 9 ausüben.

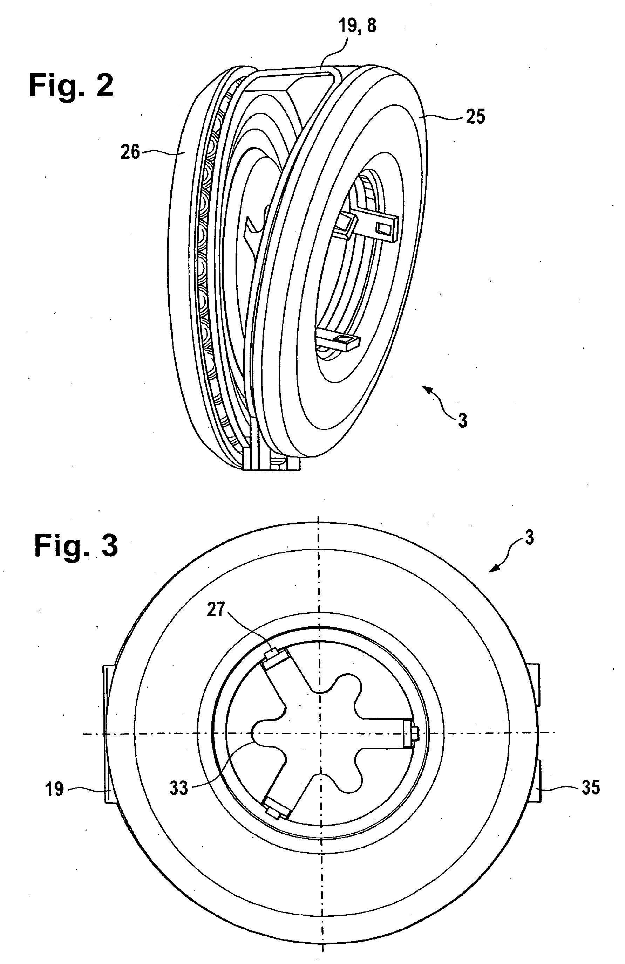

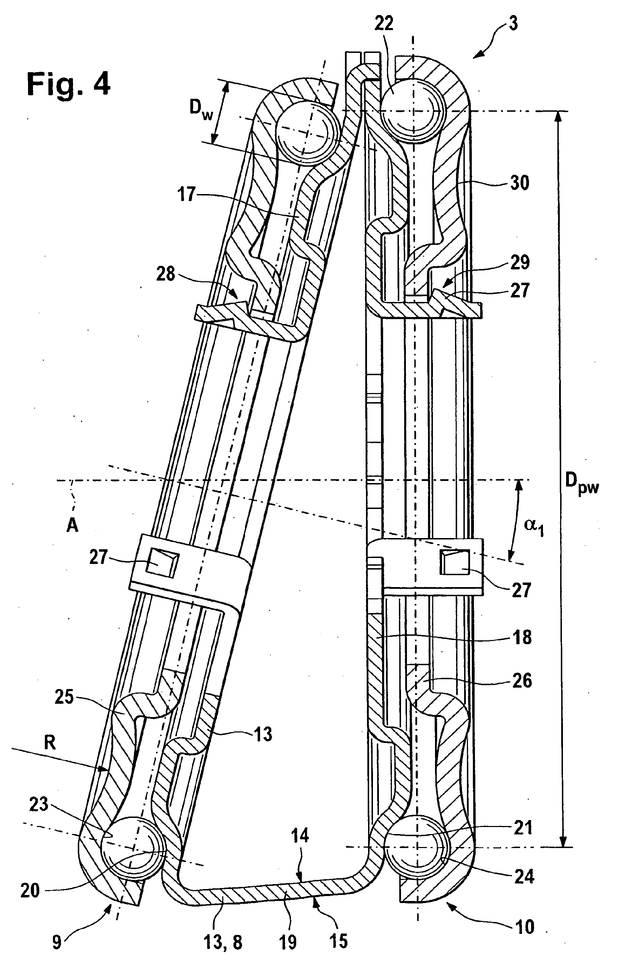

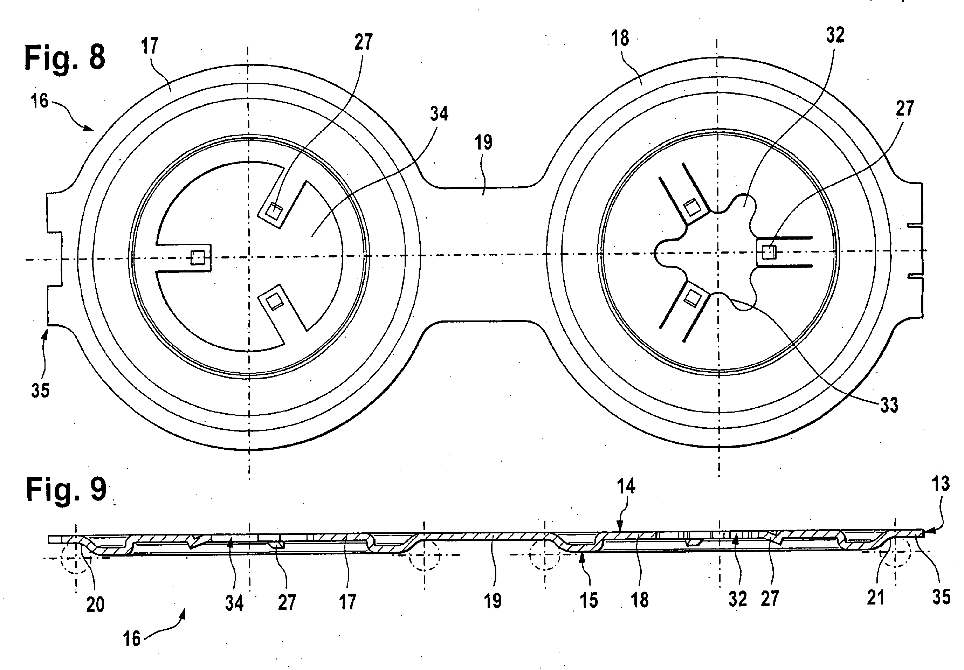

Die Figuren 2 bis 4 zeigen im Detail das Taumelscheibengetriebe 3 mit, entsprechen der Anordnung nach Figur 1, einem auf 14° eingestellten Taumelwinkel α₁. Der Taumelkörper 8 ist aus einem Blech 13 umgeformt, welches eine erste Seite 14 sowie eine zweite Seite 15 aufweist. Als Stanz-Biegeteil wird der Taumelkörper 8 aus einem Blechrohling 16 geformt, der in den Figuren 8 und 9 dargestellt ist. In der Ansicht nach Figur 8 ist ausschließlich die erste Seite 14 des Blechrohlings 16 sichtbar. Dieser weist zwei im Wesentlichen scheibenförmige Teilstücke 17, 18 auf, die über einen Steg 19 einstückig miteinander verbunden sind. In der fertig umgeformten Gestalt des Taumelkörpers 8 sind die Teilstücke 17, 18 um mehr als 180° relativ zueinander umgebogen, nämlich um 180° + α₁. Hierbei ist die zweite Seite 15 nach außen gerichtet und bildet Laufbahnen 20, 21 der Wälzlager 9, 10.

Die Wälzlager 9, 10 sind als vollkugelige Schrägkugellager mit einem Druckwinkel von 60° ausgebildet. Alle Wälzkörper, nämlich Kugeln 22, der Wälzlager 9, 10 kontaktieren dieselbe Seite 15 des Bleches 13, aus dem der Taumelkörper 8 spanlos geformt ist. Während somit die zweite Seite 15 eines jeden Teilstücks 17, 18 eine Innenlaufbahn 20, 21 eines Wälzlagers 9, 10 bildet, werden die zugehörigen Außenlaufbahnen 23, 24 durch jeweils einen Außenring 25, 26 gebildet. Der erste Außenring 25 ist als Taumelscheibe dem ersten Wälzlager 9 zugeordnet, der zweite Außenring 26 als Gehäusescheibe dem zweiten Wälzlager 10. Die Außenringe 25, 26 weisen identische Abmessungen auf und sind mittels Schnapphaken 27, die einstückig aus dem Blech 13 geformt sind, drehbar, jedoch unverlierbar am Taumelkörper 8 gehalten. Die mittels der Schnapphaken 27, welche Konturen der Außenring 25, 26. hintergreifen, hergestellten Schnappverbindungen 28, 29 sorgen zugleich dafür, dass die Wälzkörper 22 in den Wälzlagern 9, 10 unverlierbar eingeschlossen sind. Das Taumelscheibengetriebe 3 stellt damit eine als komplette Baueinheit in die Axialkolbenpumpe einsetzbare Vorrichtung dar.

Durch die vollkugelige Bauweise der Wälzlager 9, 10 ist es möglich, im Vergleich zur Dimensionierung sowie zur mechanischen Belastbarkeit des Taumelscheibengetriebes 3 relativ kleine Wälzkörper 22 zu verwenden. Der Durchmesser D_{w} eines Wälzkörpers 22 beträgt etwa 9% des Teilkreisdurchmessers Dp_{w} der Wälzlager 9, 10.

Im radial zwischen den Wälzkörpern 22 und der Rotationsachse A des Taumelscheibengetriebes 3 liegenden Bereich weisen die Außenringe 25, 26 einen konkaven Oberflächenbereich 30 mit einem Krümmungsradius R auf. Der Radius R beträgt ca. 20% des Teilkreisdurchmessers D_{PW}. Im Vergleich zu den Kugeln 22 ist der konkave Oberflächenbereich 30 wesentlich weniger stark gekrümmt. Damit sind die eine einheitliche Form aufweisenden Außenringe 25, 26, wie in den Figuren 2 bis 4 dargestellt, unabhängig von der Einstellung des Taumelwinkels α, d.h. des zwischen den Wälzlagern 9, 10 eingeschlossenen Winkels, zur direkten Zusammenwirkung mit den konvex geformten Fußstücken 12 der Kolben 5 geeignet.

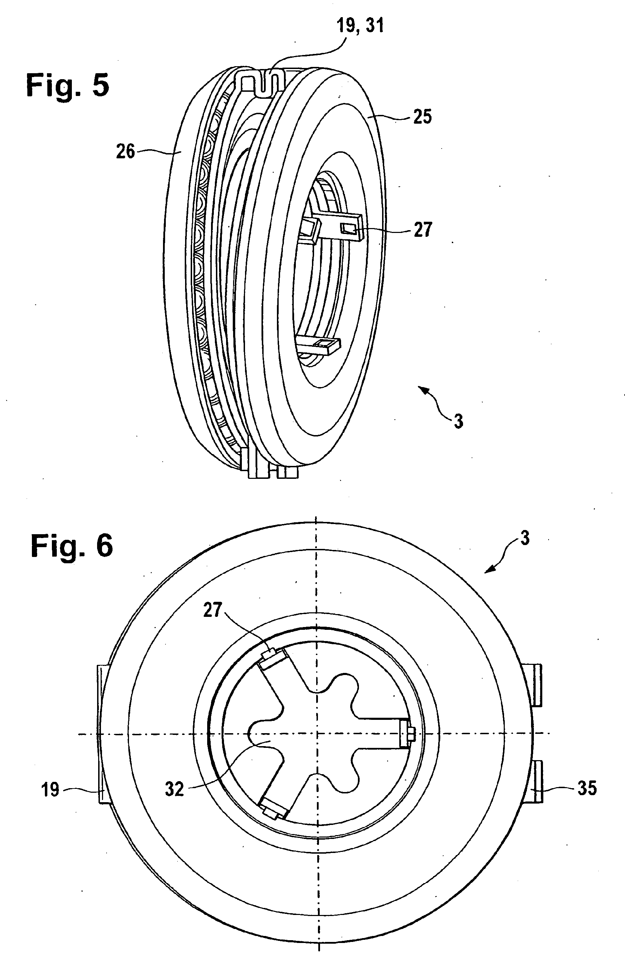

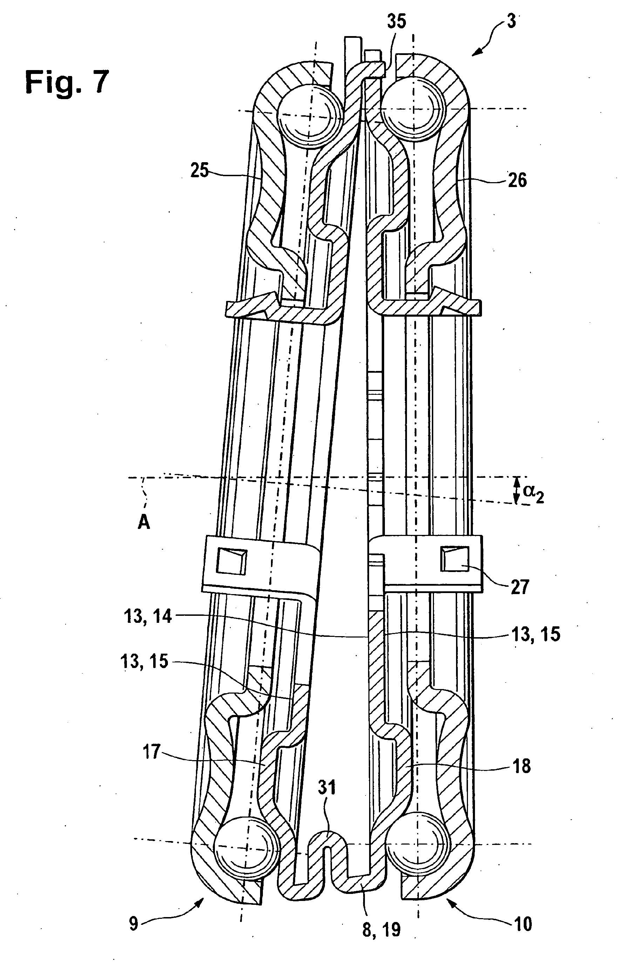

In den Figuren 5 bis 7 ist das Taumelscheibengetriebe 3 mit auf 5° eingestelltem Taumelwinkel α₂ dargestellt. Mit Ausnahme des Steges 19 sind sämtliche Teile des Taumelscheibengetriebes 3 mit der Anordnung nach den Figuren 2 bis 4 identisch. Der Steg 19 weist in der Einstellung nach den Figuren 5 bis 7 eine nachträglich, d.h. nach der Formgebung der Teilstücke 17, 18 erzeugte Biegung 31 auf, durch die der axiale Abstand zwischen den Teilstücken 17, 18 verringert ist. In dem dem Steg 19 am Umfang des Taumelkörpers 8 gegenüberliegenden Bereich sind die Teilstücke 17, 18 mittels zum Teil umgebogener, einstückig aus dem Blech 13 geformter Zungen 35 formschlüssig miteinander verbunden. Damit sind selbst geringfügige Verdrehungen zwischen den Teilstücken 17, 18, welche die inneren Laufbahnen 20, 21 bilden, ausgeschlossen.

Um den Antrieb des Taumelkörpers 8 mittels der Welle 4 zu ermöglichen, weist eines der Teilstücke 17, 18, nämlich dasjenige Teilstück 18, an welchem die Gehäusescheibe 26 gelagert ist, eine Öffnung 32 mit einem Innensternprofil 33 auf, welches dem Profil des Wellenzapfens 7 angepasst ist. Das der Lagerung der Taumelscheibe 25 dienende Teilstück 17 des Taumelkörpers 8 ist dagegen vom Wellenzapfen 7 beabstandet und weist eine im Vergleich zur Öffnung 32 des Teilstücks 18 größere Öffnung 34 auf, womit eine sehr gute Schmiermittelversorgung der Wälzlager 9, 10 sichergestellt ist. Auch mit dem durch Verformung des Steges 19 eingestellten Taumelwinkel α₂ von 5° ist das Taumelscheibengetriebe 3 zum Einbau in die Axialkolbenpumpe 1 nach Figur 1 geeignet. In den dargestellten Einstellungen des Taumelwinkels α₁, α₂ ist der Taumelkörper 8 ebenso wie in sämtlichen Zwischeneinstellungen ausgewuchtet.

### Bezugszeichenliste

| | | | |
|---|---|---|---|
| 1 | Axialkolbenpumpe | 31 | Biegung |
| 2 | Pumpengehäuse | 32 | Öffnung |
| 3 | Taumelscheibengetriebe | 33 | Innensternprofil |
| 4 | Welle | 34 | Öffnung |
| 5 | Kolben | 35 | Zunge |
| 6 | Dichtung | | |
| 7 | Wellenzapfen | α₁, α₂ | Taumelwinkel |
| 8 | Taumelkörper | A | Rotationsachse |
| 9 | Wälzlager | D_{w} | Durchmesser |
| 10 | Wälzlager | D_{pw} | Teilkreisdurchmesser |
| 11 | Druckfeder | R | Krümmungsradius |
| 12 | Fußstück | | |
| 13 | Blech | | |
| 14 | erste Seite | | |
| 15 | zweite Seite | | |
| 16 | Blechrohling | | |
| 17 | Teilstück | | |
| 18 | Teilstück | | |
| 19 | Steg | | |
| 20 | Laufbahn | | |
| 21 | Laufbahn | | |
| 22 | Wälzkörper | | |
| 23 | Außenlaufbahn | | |
| 24 | Außenlaufbahn | | |
| 25 | Außenring | | |
| 26 | Außenring | | |
| 27 | Schnapphaken | | |
| 28 | Schnappverbindung | | |
| 29 | Schnappverbindung | | |
| 30 | konkaver Oberflächenbereich | | |

## Patentansprüche

1. Taumelscheibengetriebe (3), insbesondere für eine Axialkolbenpumpe, mit einem mittels jeweils eines Wälzlagers (9, 10) zwischen einer Gehäusescheibe (26) und einer Taumelscheibe (25) drehbar gelagerten, als Umformteil aus Blech (13) gefertigten Taumelkörper (8), wobei an der Oberfläche des eine erste Seite (14) und eine zweite Seite (15) aufweisenden Bleches (13) Laufbahnen (20, 21) der Wälzlager (9, 10) gebildet sind, wobei beide Laufbahnen (20, 21) auf derselben Seite (14, 15) des Bleches (13) angeordnet sind, **dadurch gekennzeichnet, dass** die Taumelscheibe (25) zwei einstückig über einen Steg (19) miteinander verbundene Teilstücke (17, 18) aufweist, an deren Oberfläche jeweils eine Laufbahn , (20, 21) gebildet ist, wobei die Teilstücke (17, 18) um mehr als 180° gegeneinander umgebogen sind.

2. Taumelscheibengetriebe (3) nach Anspruch 1, **dadurch gekennzeichnet, dass** beide Wälzlager (9, 10) übereinstimmende Abmessungen aufweisen.

3. Taumelscheibengetriebe (3) nach Anspruch 1 oder 2, **dadurch gekennzeichnet, dass** als Wälzlager (9, 10) vollkugelige Schrägkugellager mit einem Druckwinkel von mindestens 45° und höchstens 75° vorgesehen sind.

4. Taumelscheibengetriebe (3) nach einem der Ansprüche 1 bis 3, **dadurch gekennzeichnet, dass** die Wälzkörper (22) der Wälzlager (9, 10) einen Durchmesser (D_{w}) aufweisen, der weniger als 10% des Teilkreisdurchmessers (D_{pw}) des Wälzlagers (9, 10) entspricht.

5. Taumelscheibengetriebe (3) nach einem der Ansprüche 1 bis 4, **dadurch gekennzeichnet, dass** die Gehäusescheibe (26) und die Taumelscheibe (25) Außenringe (25, 26) der Wälzlager (9, 10) bilden und außenseitig einen konkaven Oberflächenbereich (30) aufweisen, welcher zur Zusammenwirkung mit einem balligen, insbesondere halbkugeligen Fußstück (12) eines Kolbens (5) vorgesehen ist.

6. Taumelscheibengetriebe (3) nach Anspruch 5, **dadurch gekennzeichnet, dass** der Krümmungsradius (R) des konkaven Oberflächenbereichs (30) weniger als 25% des Teilkreisdurchmessers (D_{pw}) des Wälzlagers (9, 10) beträgt.

7. Taumelscheibengetriebe (3) nach einem der Ansprüche 1 bis 6, **dadurch gekennzeichnet, dass** mindestens eines der Teile Gehäusescheibe (26) und Taumelscheibe (25), insbesondere mittels einer Schnappverbindung (28, 29), mit dem Taumelkörper (8) drehbar und zugleich unverlierbar verbunden ist.

8. Taumelscheibengetriebe (3) nach einem der Ansprüche 1 bis 7, **dadurch gekennzeichnet, dass** die beiden Teilstücke (17, 18) auf der dem Steg (19) abgewandten Seite des Umfangs des Taumelkörpers (8) miteinander verbunden sind.

9. Taumelscheibengetriebe (3) nach einem der Ansprüche 1 bis 8, **dadurch gekennzeichnet, dass** die Verbindung der beiden Teilstücke (17, 18) auf der dem Steg (19) abgewandten Seite des Taumelkörpers (8) formschlüssig ist.

10. Taumelscheibengetriebe (3) nach einem der Ansprüche 1 bis 9, **dadurch gekennzeichnet, dass** der Taumelkörper (8) eine zentrale Öffnung (32) mit einem zur formschlüssigen Zusammenwirkung mit einer antreibenden Welle (4) geeigneten Innenprofil (33) aufweist.

## Claims

1. Swashplate mechanism (3), in particular for an axial piston pump, with a wobble body (8) mounted rotatably in each case by means of a rolling bearing (9, 10) between a housing plate (26) and a swashplate (25) and manufactured as a formed part from sheet metal (13), raceways (20, 21) of the rolling bearings (9, 10) bering formed on the surface of the metal sheet (13) having a first side (14) and a second side (15), the two raceways (20, 21) being arranged on the same side (14, 15) of the metal sheet (13), **characterized in that** the swashplate (25) has two portions (17, 18) which are connected to one another in one piece via a web (19) and on the surface of which a raceway (20, 21) is formed in each case, the portions (17, 18) being bent round by more than 180° with respect to one another.

2. Swashplate mechanism (3) according to Claim 1, **characterized in that** the two rolling bearings (9, 10) have identical dimensions.

3. Swashplate mechanism (3) according to Claim 1 or 2, **characterized in that** the rolling bearings (9, 10) provided are fully spherical angular ball bearings with a pressure angle of at least 45° and at most 75°.

4. Swashplate mechanism (3) according to one of Claims 1 to 3, **characterized in that** the rolling bodies (22) of the rolling bearings (9, 10) have a diameter (D_{w}) which corresponds to less than 10% of the reference circle diameter (D_{pw}) of the rolling bearing (9, 10).

5. Swashplate mechanism (3) according to one of Claims 1 to 4, **characterized in that** the housing plate (26) and the swashplate (25) form outer rings (25, 26) of the rolling bearings (9, 10) and have on the outside a concave surface region (30) which is provided for cooperation with a convex, in particular hemi-spherical foot piece (12) of a piston (5).

6. Swashplate mechanism (3) according to Claim 5, **characterized in that** the radius of curvature (R) of the concave surface region (30) amounts to less than 25% of the reference circle diameter (D_{pw}) of the rolling bearing (9, 10).

7. Swashplate mechanism (3) according to one of Claims 1 to 6, **characterized in that** at least one of the parts, namely the housing plate (26) and swashplate (25), are connected to the wobble body (8) rotatably and at the same time captively, in particular by means of a snap connection (28, 29).

8. Swashplate mechanism (3) according to one of Claims 1 to 7, **characterized in that** the two portions (17, 18) are connected to one another on that side of the circumference of the wobble body (8) which faces away from the web (19).

9. Swashplate mechanism (3) according to one of Claims 1 to 8, **characterized in that** the connection of the two portions (17, 18) on that side of the wobble body (8) which faces away from the web (19) is positive.

10. Swashplate mechanism (3) according to one of Claims 1 to 9, **characterized in that** the wobble body (8) has a central orifice (32) with an inner profile (33) suitable for the positive cooperation with a driving shaft (4).

## Revendications

1. Mécanisme à plateau oscillant (3), notamment pour une pompe à piston axial, comprenant un corps en nutation (8) monté à rotation au moyen d'un palier de roulement respectif (9, 10) entre un plateau de boîtier (26) et un plateau oscillant (25), fabriqué sous forme de pièce façonnée en tôle (13), des pistes de roulement (20, 21) des paliers à roulement (9, 10) étant formées sur la surface de la tôle (13) présentant un premier côté (14) et un deuxième côté (15), les deux pistes de roulement (20, 21) étant disposées du même côté (14, 15) de la tôle (13), **caractérisé en ce que** le plateau oscillant (25) présente deux pièces partielles (17, 18) connectées d'une seule pièce l'une à l'autre par le biais d'une nervure (19), à la surface desquelles est formée une piste de roulement respective (20, 21), les pièces partielles (17, 18) étant cintrées l'une par rapport à l'autre de plus de 180°.

2. Mécanisme à plateau oscillant (3) selon la revendication 1, **caractérisé en ce que** les deux paliers à roulement (9, 10) présentent des dimensions coïncidentes.

3. Mécanisme à plateau oscillant (3) selon la revendication 1 ou 2, **caractérisé en ce que** l'on prévoit comme paliers à roulement (9, 10) des roulements à billes à contact sphérique à billes pleines, avec un angle de pression d'au moins 45° et d'au plus 75°.

4. Mécanisme à plateau oscillant (3) selon l'une quelconque des revendications 1 à 3, **caractérisé en ce que** les corps de roulement (22) des paliers à roulement (9, 10) présentent un diamètre (D_{w}) qui correspond à moins de 10% du diamètre du cercle partiel (D_{pw}) du palier à roulement (9, 10).

5. Mécanisme à plateau oscillant (3) selon l'une quelconque des revendications 1 à 4, **caractérisé en ce que** le plateau de boîtier (26) et le plateau oscillant (25) forment des bagues extérieures (25, 26) des paliers à roulement (9, 10) et présentent du côté extérieur une région de surface concave (30) qui est prévue pour coopérer avec une partie de base (12) d'un piston (5), de forme bombée, notamment hémisphérique.

6. Mécanisme à plateau oscillant (3) selon la revendication 5, **caractérisé en ce que** le rayon de courbure (R) de la région de surface concave (30) vaut moins de 25% du diamètre du cercle partiel (D_{pw}) du palier à roulement (9, 10).

7. Mécanisme à plateau oscillant (3) selon l'une quelconque des revendications 1 à 6, **caractérisé en ce qu'**au moins l'un du plateau de boîtier (26) et du plateau oscillant (25) est connecté de manière rotative et en même temps imperdable au corps en nutation (8) notamment au moyen d'une connexion par encliquetage (28, 29).

8. Mécanisme à plateau oscillant (3) selon l'une quelconque des revendications 1 à 7, **caractérisé en ce que** les deux pièces partielles (17, 18) sont connectées l'une à l'autre du côté de la périphérie du corps en nutation (8) opposé à la nervure (19).

9. Mécanisme à plateau oscillant (3) selon l'une quelconque des revendications 1 à 8, **caractérisé en ce que** la connexion des deux pièces partielles (17, 18) du côté du corps en nutation (8) opposé à la nervure (19) est une connexion par engagement par correspondance géométrique.

10. Mécanisme à plateau oscillant (3) selon l'une quelconque des revendications 1 à 9, **caractérisé en ce que** le corps en nutation (8) présente une ouverture centrale (32) avec un profil interne (33) approprié pour coopérer par engagement par correspondance géométrique avec un arbre d'entraînement (4).
